(19) Europäisches Patentamt

European Patent Office

Office européen des brevets

(11) **EP 1 084 366 B1**

(12) **EUROPEAN PATENT SPECIFICATION**

(45) Date of publication and mention
of the grant of the patent:
**17.09.2003 Bulletin 2003/38**

(21) Application number: **99927947.4**

(22) Date of filing: **10.06.1999**

(51) Int Cl.⁷: **F21V 8/00**

(86) International application number:
**PCT/EP99/04010**

(87) International publication number:
**WO 99/064785 (16.12.1999 Gazette 1999/50)**

(54) **LIGHT DISTRIBUTION SYSTEM**

LICHT VERTEILUNGSSYSTEM

SYSTEME DE DISTRIBUTION DE LUMIERE

(84) Designated Contracting States:
**AT CH DE GB IE LI**

(30) Priority: **11.06.1998 AU PP404098
09.11.1998 AU PP701498
02.02.1999 AU PP842099**

(43) Date of publication of application:
**21.03.2001 Bulletin 2001/12**

(73) Proprietor: **Zumtobel Staff GmbH
6851 Dornbirn (AT)**

(72) Inventor: **EDMONDS, Robert Ian
Brisbane, QLD 4069 (AU)**

(74) Representative:
**Schmidt-Evers, Jürgen, Dipl.-Ing.
Patentanwälte Mitscherlich & Partner,
Sonnenstrasse 33
80331 München (DE)**

(56) References cited:
**EP-A- 0 732 679          EP-A- 0 846 915
EP-A- 0 879 991          WO-A-97/08582**

**Description**

Conventional light distribution systems comprise discrete luminaires connected and supplied by electrical power cables. The luminaires are generally distributed evenly over the ceiling of the room or space to be illuminated. This type of system has the disadvantage of a large number of relatively expensive individual light sources in the ceiling of the room. Each individual light source must be maintained or replaced at regular intervals requiring access to the light source which may, for example, be in a high ceiling. Each individual light source requires a considerable expense in electric cabling, switching and control.

In remote source electrical lighting a small number of highly efficient and high output light sources may be linked by a light piping system incorporating light extraction and distribution devices. The advantages of such a system are that once installed on the ceiling of a building the light piping system requires little maintenance and the remote electrical light sources may be located at a position much more readily accessible than the ceiling. This is particularly the case in high ceiling buildings such as theatres, sport stadiums, swimming pools or lecture theatres.

However the means for extracting and distributing the light from such light piping systems are poorly developed. Light piping systems are usually based on hollow light guides in the form of a cylindrical metallic reflector, or, on light guides formed from solid transparent material in which the transmission of light occurs by the highly efficient phenomenon of total internal reflection at the solid dielectric to air interface. The reason for the fact that the means of extracting and distributing the light from hollow light guides and, more particularly, from solid transparent light guides are very poorly developed is that the light is transported through the volume of the solid light guide. For extracting light efficiently it is desirable that the extraction of light occurs from elements inside the solid light guide. However it is not obvious how light extraction means may be easily incorporated within the volume of a solid transparent light guide.

A method for making light deflecting window panels for the improved illumination of rooms by forming an array of laser cuts in a transparent acrylic sheet has been described previously, (Edmonds, AU 601634 (1990) "A window panel for improved daylighting of room interiors"; US 4,989,952 (1991) "Transparent light deflecting panel for daylighting rooms"). With the objective of deflecting light as it is being transmitted through a window panel the laser cuts are made at angles near normal to the surface of the panel so as to produce an array of reflecting surfaces within the panel which serve to deflect light transmitted from one side of the panel to the other. However the present invention differs both in objective and in method from this previous invention.

It is an objective of the present invention to provide a light distribution system with a simple and versatile method for the extraction and distribution of light from a light guide.

The discussion above relates to remote source lighting in which light from a remote source is piped to a location where it is extracted and distributed for the purpose of illumination. The same concepts of light guiding, light extraction and light distribution may also be applied to the production of novel forms of luminaires in which light is guided from a source which is not remote from, but adjoins the light extraction and distribution system. In this case the source, the solid transparent light guide, and the means of extraction and distribution of light form a localised system which serves the same function as systems generally referred to as luminaires. Light sources used in luminaires emit light with substantially radial or spherical symmetry if the source is point like (for example high intensity discharge lamps) or with substantially cylindrical symmetry if the source is tubular (for example fluorescent tubes). In a conventional form of luminaire light from an essentially radial or cylindrical source travels directly through space to a reflective or diffusive element which serves to distribute the light in some desired manner. In the form of luminaire envisaged here a solid light guide and the associated extraction and distribution means serve to distribute light from essentially radial or cylindrical light sources in some desired manner.

Therefore another objective of the present invention is to provide a simple and versatile method for extracting and distributing light from solid light guides for the purpose of producing novel and useful forms of luminaires.

It is desirable to produce a display which can be readily switched to display multiple messages to the front or to the rear of the display. Displays in which light is admitted to a transparent panel and then extracted from the panel in a specified pattern have been described previously. The methods of extracting the light include (1), producing a sandblasted surface pattern which diffuses some light out of the panel and (2), laminating a diffusing surface to the panel which also diffuses some light out of the panel. Both methods suffer from low efficiency due to the fact that diffusing surfaces generally diffuse light both in the forward and backward direction and thereby lower the efficiency of producing forwardly diffused light. Also as the visual display originates from diffuse light the brightness of the display falls rapidly with distance from the display. Therefore if light could be extracted from a solid transparent panel in a direction primarily normal to the face of the panel the brightness of the display when viewed from a distance would be much greater.

Therefore it is another object of this invention to provide a simple and versatile method of extracting light from a transparent light guiding panels at defined positions on the panel so as to produce a bright and useful form of display which can be readily switched to display, alternately, up to four different messages from the same panel.

The international publication WO 97/08582 discloses an illumination system for a flat-panel picture display device comprising an optical waveguide and a light source whose light is coupled into the optical waveguide. In order to extract the light, said waveguide is provided with recesses which are filled up with a material which is different from that of-the optical waveguide. Due to the difference in the materials, the recesses provide reflective surfaces which reflect the light in a direction normal to the surface of the waveguide. The later published EP 0 879 991 A2 describes also an illuminating system with a light guide which is provided with recesses in order to extract the light from said light guide.

Finally, it is an object of the present invention to improve the know waveguides in a way that an equal light emission is obtained.

The present invention provides a light distribution system with means for extracting and distributing light from a solid transparent light guide. The means for extracting the light are cuts in the light guide, the cuts extending right through, or partly through, the solid light guide such that highly reflecting surfaces are produced inside the solid light guide which reflect light propagating in the light guide out of the light guide and into directions approximately normal to the surface of the light guide. In order to obtain an equal light emission over the whole light guide or at least over a certain area or pattern, the density of the cuts in said light guide increases along the direction in which the light propagates in said light guide.

The light guide might be made from acrylic plastic wherein the cuts are obtained by laser cutting. Further, it is possible to produce different illumination effects by arranging cuts in different patterns. This might be used in a display panel which is another embodiment of the present invention.

The invention is illustrated in the drawings of which:

FIG 1 illustrates the basis form of a light distribution system according to the present invention;

FIG 2 is a cross section view of a light guide with light being extracted from the light guide by angled laser cuts according to this invention;

FIG 3 shows the manner of distributing angled laser cuts in a light guide so as to extract equal quantities of light at each section of guide so as to produce a source of constant luminance;

FIG 4 shows an arrangement whereby a light guide with angled laser cuts to extract and distribute light is connected via solid light guide to a remote source of light:

FIG 5 illustrates how multiple light guides with angled laser cuts extracting light according to this invention may be linked via conventional light guiding elements to a single intense and remote source;

FIG 6 illustrates how a point like light source may be coupled to a disc like light guide;

FIG 7 illustrates how light propagating in a disc like light guide may be extracted from the guide by making angled laser cuts in the guide according to this invention;

FIG 8 illustrates how light may be refracted upwards or downwards at the outer edge of a light guide by cutting or milling the outer face to some appropriate angle;

FIG 9 illustrates how light from a tubular light source may be coupled to a planar solid transparent light guide provided with the angled laser cuts of this invention in order to extract light from the guide for the purpose of room illumination;

FIG 10 illustrates how a light source emitting a substantially parallel beam may be coupled to a light guide so that light propagates radially in the guide and may be extracted at angled laser cuts for the purpose of room illumination;

FIG 11 shows how multiple light guides provided with angled laser cuts for light extraction may be coupled through a ceiling aperture to a light source located within the ceiling cavity;

FIG 12 shows how a pattern of angled laser cuts may be made in a large solid transparent panel so that the large panel may subsequently be sub divided into a set of smaller panels with an approximation of a radial pattern of angled laser cuts in each sub divided panel;

FIG 13 illustrates how light propagating in a transparent solid light guide may be extracted to one face or the other face of the guide by an angled laser cut depending on the direction of light propagation in the guide;

FIG 14 illustrates how a pattern of angled laser cuts in a solid transparent panel may produce a pattern of luminance to one side or the other side of the panel dependant on the switching of tubular light sources at different edges of the panel;

FIG 15 illustrates how two patterns of angled laser cuts encoding two different messages in a panel may be alternately illuminated by sources at the edges of the panel to display the messages to the front or the back of the panel;

FIG 16 illustrates how a dense pattern of small angled laser cuts may be made in a panel to encode a symbolic message in a panel which may be illuminated by lights at the edges of the panel;

FIG 17 shows how a dense pattern of small angled laser cuts may be made in a panel to encode two messages in a panel which may be alternately illuminated by light sources at two edges of the panel;

FIG 18 shows how a dense pattern of small angled laser cuts may be made in a panel to encode four messages in a panel which may be alternately illuminated by light sources at the four edges of the panel.

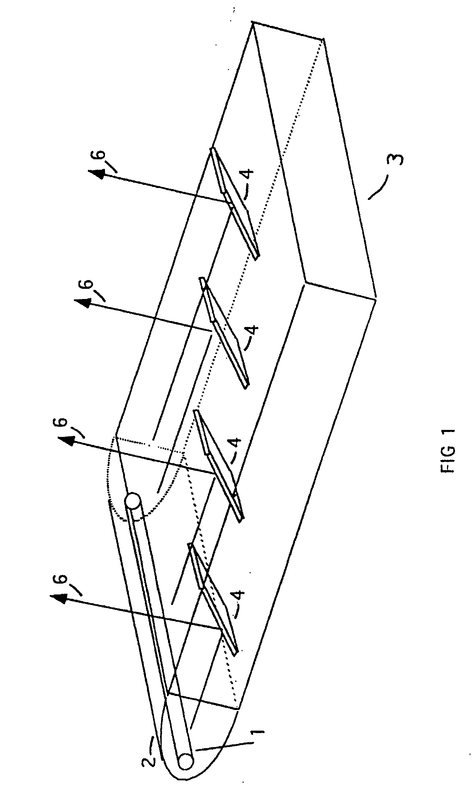

The basic form of light distribution system to which the present invention relates comprises at least one source of light, a means of injecting light from the source into at least one transparent solid light guide and a means of extracting the light from the light guide such that some desired light distribution may be obtained. Referring to FIG 1, light from a cylindrical source 1 (e.g. from a fluorescent light tube) is coupled into a solid transparent light guide 3 with a rectangular cross section by a reflector 2.

The light extraction and distribution method of this invention is obtained by making cuts 4 in the material of the guide. In a first embodiment the material for the light guide 3 is acrylic plastic and the cuts 4 were made with a programmable laser cutting maching in order to obtain very thin and accurate laser cuts 4 with two parallel surfaces. The lasercuts 4 extend from the surface of the guide 3 right through or partly through the material at a predetermined angle to the normal to the surface such that light rays 6 propagating inside the guide 3 are reflected at the acrylic to air interfaces so produced by the lasercuts and are reflected through the surface of the light guide and out of the light guide in a direction substantially normal to the surface of the light guide.

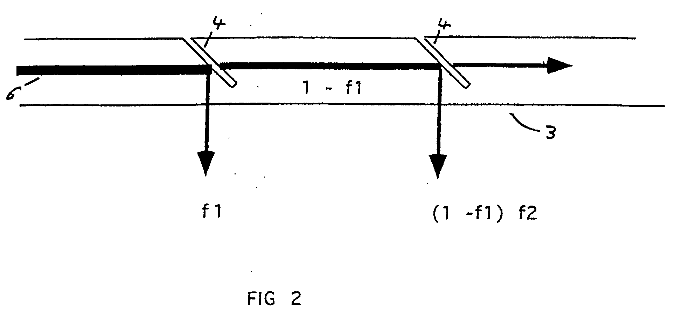

The geometry of this method of light extraction is shown in FIG 2. where a longitudinal cross section of a solid light guide of rectangular profile with light propagating from the left toward the right is illustrated. When light 6 propagating parallel to the surface of the solid light guide 3 meets a thin laser cut 4 made in the material at an angle of 45° to the normal to the surface the light is total internally reflected at the air - material interface so created and is reflected out through the surface of the material in a direction normal to the surface of the material. The angle of incidence on the internal surface produced by laser cutting is, in this case, 45° which exceeds the critical angle for total internal reflection $i_c$ at an air to acrylic interface ($i_c = \arcsin(1/n)$) where n is the refractive index of the material in the wavelength region of visible light (n = 1.5 and $i_c = 42°$ for acrylic plastic). Thus in this case all light incident on the laser cuts is extracted from the guide. More generally light propagating within the solid light guide by total internal reflection lies within an angular range of +/- 42° of the longitudinal axis of the guide. Some of this light will be incident on the surface of the laser cuts at angles of incidence < $i_c$ and will not be totally reflected. Thus, in general, only some fraction of the light incident on the laser cuts will be totally internally reflected with the remainder being partially reflected and partially transmitted. Additionally if the laser cuts do not extend right through the guide and/or if the laser cuts do not extend all the way across the guide then some light propagating in the guide will not intercept the laser cuts. Thus in general some fraction $f_1$ will be reflected out of the guide at the location of laser cuts with the remainder $(1 - f_1)$ transmitted further along the guide. At a location further along the guide a different fraction $f_2$ may be extracted by laser cuts of appropriate extent.

Depending on the angle and extent of the laser cuts there are many light distributions possible with this system. However one practical form of light distribution from a guide would require that equal amounts of light be extracted from all parts of the light guide. In this case the luminous energy propagating in the light guide would decrease progressively along the length of the light guide and to obtain equal emission from all parts of the guide the laser cuts would need to be such that progressively larger fractions of the luminous energy were extracted at progressively larger distances along the light guide. It may be shown, (Edmonds et al, Extractors and emitters for light distribution from hollow light guides, Lighting RESEACH and Technology, 29(1) 23-32 (1997), Corrigenda 29(2) 88 (1997)) that equal emission may be obtained if the fractions extracted per unit length of the guide, fi, are related by the expression

$$f_i = f_i + 1/(1 + f_i + 1).$$

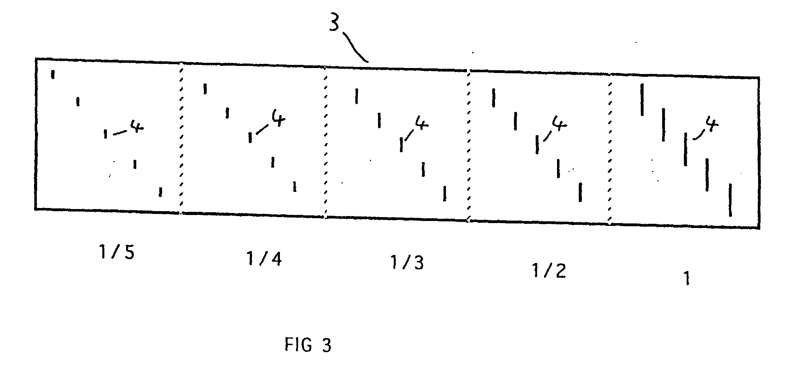

It follows that the fraction of light extracted out of the guide must follow the inverse ratio of (1 + x) where x is the distance from the end of the guide. For example, the fraction of light extracted at the end of the guide should equal 1 and at progressive unit distances, x, towards the input to the guide the fraction of light extracted should decrease as $1/(1 + x)$. That is as 1, 1/2, 1/3, 1/4, 1/5, etc. This fractional extraction and even distribution of luminance can be achieved by spacing the laser cuts across the guide as illustrated in FIG 3. FIG 3 shows a rectangular light guide 3 which is unit distance wide and 5 unit distances long. The third dimension,the thickness of the guide, would be about 1/100 of a unit distance in a practical guide. For example if the unit distance is one metre the thickness of transparent acrylic sheet used for the guide would be 1 cm. The laser cuts 4 are made such that in the first unit section the cuts extend over 1/5 of the width of the guide, and in the next section over 1/4 of the width etc. In practice the cuts would be made smaller and more numerous so that the required fraction extracted is obtained with a much more even distribution of extraction points than illustrated in FIG 3. Also account must be made of the fact that not all light propagating in the guide suffers total internal reflection at the laser cuts. However this example illustrates the general principle by which desired distributions may be obtained. When a light guide with laser cuts made in this manner is coupled to a thin cylindrical light source by a collimation device as illustrated in FIG 1 then the light guide becomes an extended source of constant luminance.

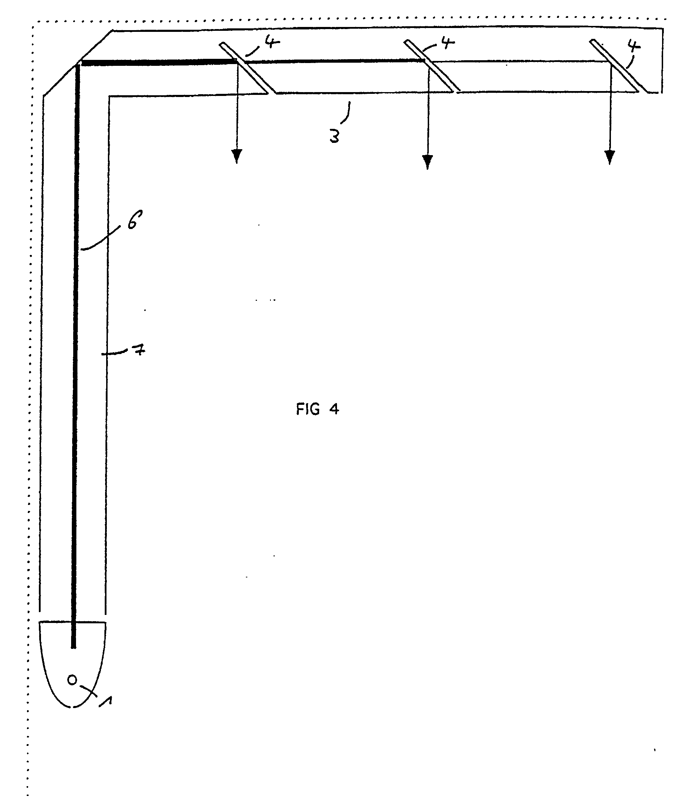

As one of the desirable features of remote source lighting systems is easy access to the light source it may be desirable to couple a light guide 3 with laser cuts 4 for extraction and distribution via a connecting light guide 7 to a source 1 at some convenient location as illustrated in FIG 4.

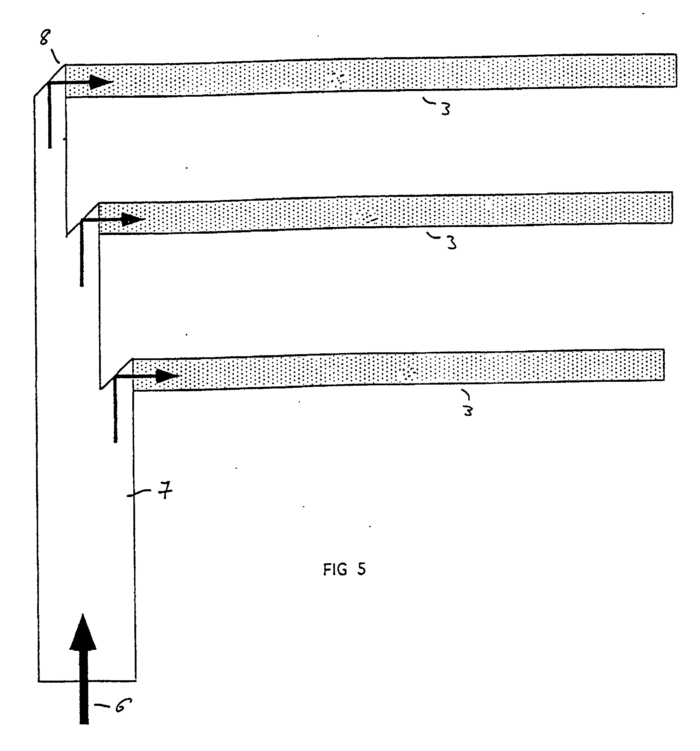

A light distribution system as illustrated in FIG 5 may be made to provide for light transport from a single intense light source 1 via a solid acrylic guide 7 connected via right angle bends 8 to multiple light guides 3 with light extracting laser cuts as in FIG 1, 2 or 3 to provide an extended light distribution system capable of illuminating large rooms.

Another objective of the present invention is to provide a light distribution system using a simple and versatile method for extracting and distributing light from solid light guides for the purpose of producing novel and useful forms of luminaires. In luminaires the light guide is used to transfer light away from a high intensity source to a position from where it may be extracted and distributed, at much lower luminance, into some desired angular range. The specific form of the light guide used and the specific form of the light extraction method of this invention depends on the type of light source. There are three types of common light sources; point-like sources, line-like sources and sources which deliver a near parallel distribution of light from an associated parabolic reflector.

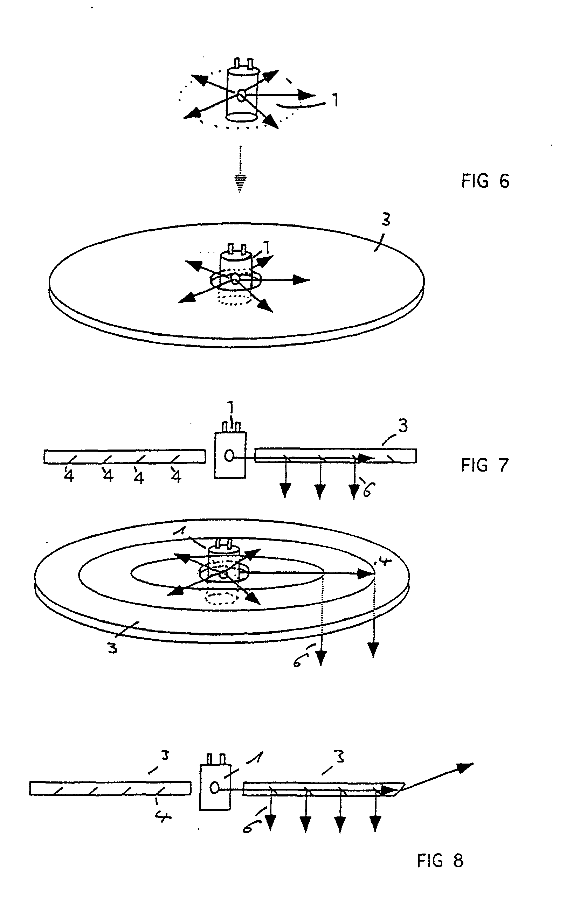

Where the light source is point like, for example a short axial filament enclosed in a narrow glass cylinder as in high intensity discharge lamps the light is emitted primarily around the plane perpendicular to the axis of the filament. The effective form of light guide to match a source of this type is a flat disc of transparent solid material located in the radial plane as illustrated in FIG 6. Referring to FIG 6 the source 1 is centred in a central circular hole in a transparent solid disc 3. Light which enters the transparent disc 3 from the central source 1 is guided out radially from the centre by total internal reflection within the solid material of the disc. According to this invention light may be extracted and distributed from transparent guide 3 by making angled laser cuts 4 in the guide at angles substantially at 45° to the face of the disc of material as shown in cross section in FIG 7.

Any light not reflected out of the guide at a laser cut passes through the laser cut or bypasses the laser cut without change of direction and is retained within the guide. The spacing and slope of the angled cuts may be adjusted to obtain a suitable output distribution of the light with a suitably low output luminance. The laser cuts may be placed at angles in the upper or lower surface of the light guide suited to distribute proportions of light upwards or downwards so as to achieve an uplighter or downlighter effect. The outer edge of the disc may be laser cut or milled to a slope which refracts light reaching the outer edge either upwards or downwards as appropriate, as illustrated in FIG 8.

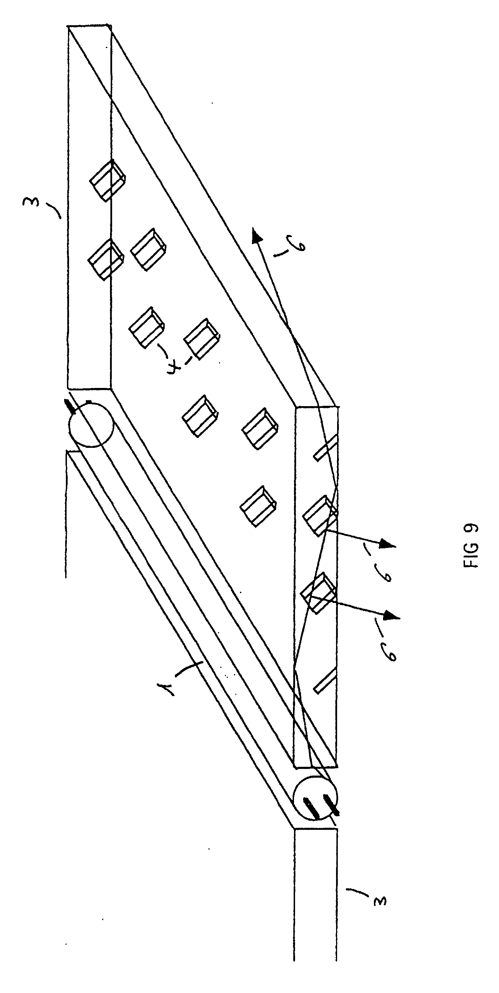

Where the light source 1 consists of a long tubular element (for example as in a conventional fluorescent tube), the light guides 3 best suited are in the form of flat rectangular panels the edges of which abut the tubular source as in FIG 9. According this invention the light may be extracted from the light guides 3 by angled laser cuts 4 made at appropriate positions across the guide 3. Any light which traverses the entire guide 3 may be extracted from the edge of the guide 3 by milling the edge to a slope which refracts the light in the desired direction as in FIG 8.

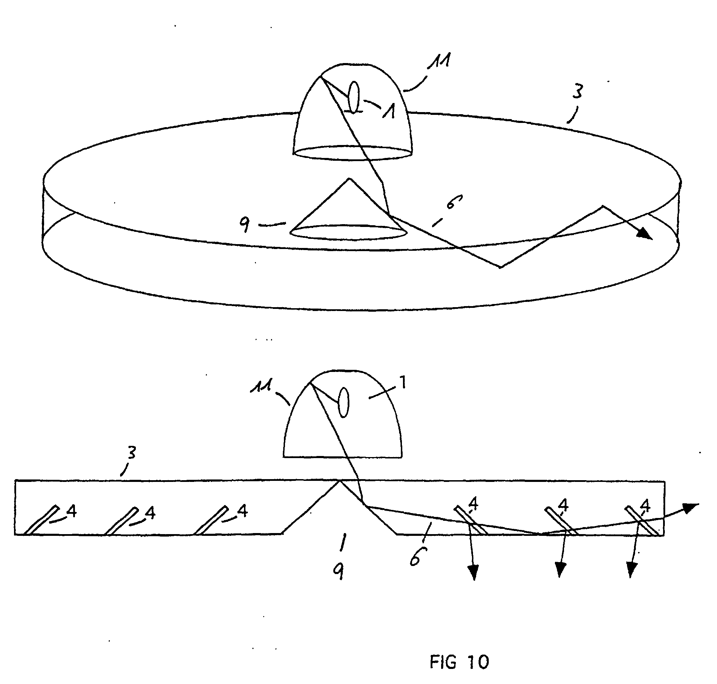

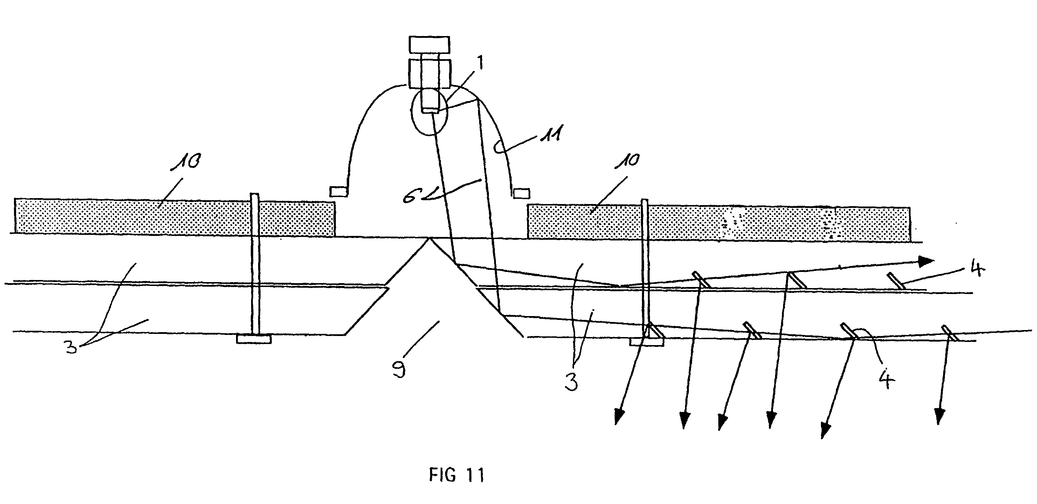

Where the light source 1 consists of a point like filament enclosed in a light directing reflector 11 as in reflector lamps or quartz halogen lamps the essentially parallel light emitted may be directed into a solid transparent guide 3 perpendicular to the emitted beam of light and the light admitted into the guide 3 by milling a conical bevel 9 in the guide at a slope of approximately 45° which deflects light from the source into the guide by total internal reflection, as in FIG 10. Once captured in the light guide 3 the light may, according to this invention, be extracted by angled laser cuts 4 placed in appropriate radial sequence (e.g. in an essentially circular or polygon like pattern) across the guide 3. This type of light guiding luminaire would normally be fixed against the ceiling 10 with the lamp 1 and parabolic reflector 11 set in the ceiling 10 as shown in FIG 11. If necessary it is possible to achieve a better match between the aperture of the source, and the guide by using two or more overlapping guides as shown in FIG 11.

According to the invention, if the light extraction is to be uniformly distributed over the surface of the guide so as to produce a luminaire of constant luminance then the density of the laser cuts should become greater in the direction in which the light propagates in the light guide as the distance from the source increases. In this way extracting a small fraction of the intense light near the source provides about the same luminosity as extracting a larger fraction of the weaker light further from the source. When the guide is linear in form so that the light is guided in one direction only the fractional density of cuts follows the simple relation $f_i = f_i + 1/(1 + f_i + 1)$ given above. However when light is guided radially within a guide the extraction ratios required should account for this different geometry.

Another alternative to influence the amount of extracted light from the light guide is to change the angle between the cuts and the normal to the surface. This possibility might be also used in order to obtain a desired distribution in different directions of emitted light. However, in a basic form the planes of all cuts are parallel to each other. In this case it would be also possible to make the cuts by other techniques than by laser cutting, e.g. by casting the light guide.

The method of making angled laser cuts in the guide varies in detail with the type of guide to be produced. For a luminaire in which the light is guided substantially in one direction from the source as, for example a tubular source as in FIG 7, the method is to make angled laser cuts to some specified depth through a large area panel (typically about 3/4 way through) at specified intervals across the panel. Subsequently the large area panel may then be laser cut into narrow rectangular panels with the required cross section. However, for a light guide in the form of a circular disc the method of placing laser cuts in the disc is more complicated. On laser cutting machines provided with an angled head the head cannot conveniently be rotated during the cutting process. Thus, to cut an angled laser cut around a circular path on a planar disc by moving the laser cutting head is not possible. In this case it is more appropriate to keep the angled laser cutting head stationary and to rotate the disc of acrylic below the laser beam. The procedure is as follows. The disc of clear acrylic plastic is mounted centrally on a rotatable platform. The laser beam is directed at the surface of the disc at the desired angle to the normal to the disc and at some specified distance from the centre of the disc and the axis of the rotating platform. The platform is set rotating at a specified angular velocity and the laser is switched on and off for specified intervals of time such that angled laser cuts are made around a circular arc centred on the centre of the disc. The cut made may be continuous or may be broken at intervals depending on the required aesthetics of the luminaire. When one arc is complete the laser is moved inward or outwards and a second series of laser cuts are made about this second circular arc, and so on. Ideally the angular speed of the rotating platform and disc would be varied so that the laser, at constant power, makes cuts of the appropriate depth through the acrylic disc.

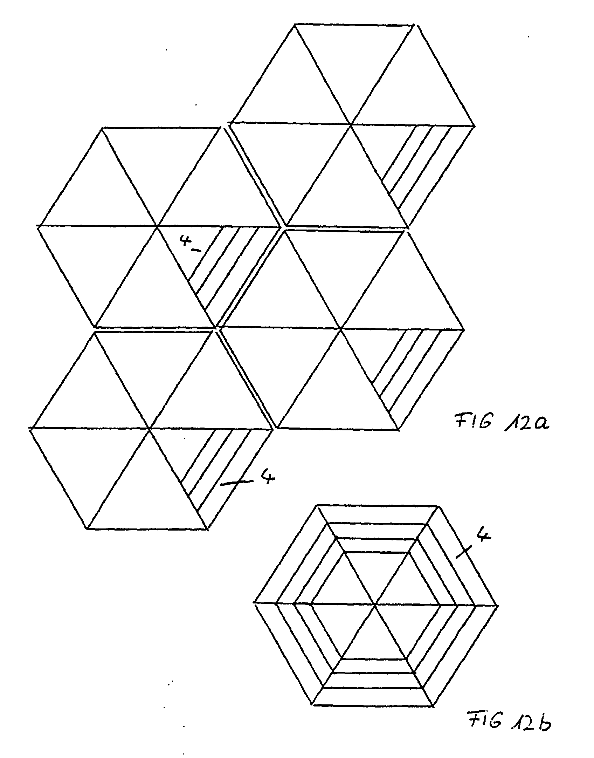

A second alternative to make angled laser cuts of essentially radial form in a disc like guide is to make a series of linear angled laser cuts 4 across a large flat panel. When one series of cuts 4 is made as shown in FIG 12a the large panel is rotated through some finite angle (for example 60°) then another series of cuts made across the panel which is then rotated again and another series of cuts made, and so on, until the panel has been rotated through 360°. Then the large panel may be subdivided into smaller disc like panels in which the combination of the series of laser cuts has produced a essentially radial or circular pattern of angled laser cuts as illustrated in FIG 12b.

It is another object of this invention to provide a simple and versatile method of extracting light from a transparent light guiding panels at defined positions on the panel so as to produce a bright and useful form of display which can be readily switched to display, alternately, up to four different messages from the same panel.

The present invention describes a method by which up to 5 different messages, including no message, can be alternately displayed. The type of display is novel and has not been described before. It provides for an illuminated sign in which words of variable size and colour can be alternately displayed. The sign may be in any size from small - less than 0.1 metre square in size - to extremely large - greater than 100 metres square. Where the display can be viewed from the front and the back then two different displays, for example STOP and GO, can be alternately switched between the front and back views. The multiple messages would include the state of no message when the display or sign would carry no message. Ideally in this state the display sign would disappear from view so entirely that viewers would not be aware that the display exists in some location.

The basis of the invention is to extract light perpendicular to a panel which is internally illuminated by light admitted into the panel (6mm to 15 mm thick) from standard thin fluorescent light tubes at the sides of the panel. The method of this invention is to make laser cuts at an angle of 45° to the face of the panel which penetrate right through or partly through the panel. The angled laser cuts are made at specified positions on the panel and in specified quantities such that letters or symbols of a message are encoded in the panel by the angled laser cuts. The regions of the panel encoded by angled laser cuts become strongly visible to a person viewing the panel when light is extracted from the panel at the laser cuts into a direction substantially normal to the face of the panel. The novel aspect of the invention is the extraction of light from the panel by using angled laser cuts made in the panel at specified locations on the panel. The advantages are (1), that the light is admitted primarily in a direction normal to the face of the panel and (2), that it is possible to overlap messages by altering the direction of the angled laser cutting and to alternately display these messages by switching light sources located at the four edges of the panel in order to alternately display up to four messages.

Displays in which light is admitted to a transparent panel and then extracted from a panel in a specified pattern have been described previously. The methods of extracting the light include (1), producing a sandblasted surface pattern which diffuses some light out of the panel and (2), laminating a diffusing surface to the panel which also diffuses some light out of the panel. The advantage and novelty of the present invention is in the extraction of light by making angled laser cuts into the panel. Angled laser cuts extract light by total internal reflection. The advantages of the present method relative to previous methods are, firstly, that with angled laser cuts the light is reflected out of the panel and not diffused. This allows for a much brighter luminance and allows the display to be seen at much greater distance. The second advantage is that multiple displays (up to 4 in number) may be made in the same area of panel with each particular display having its pattern of angled laser cuts sloping at directions at 90° to the each other. By placing tubular light sources at each edge of the panel up to 4 different displays can be alternately displayed from the face of the panel by switching alternately between the 4 light sources.

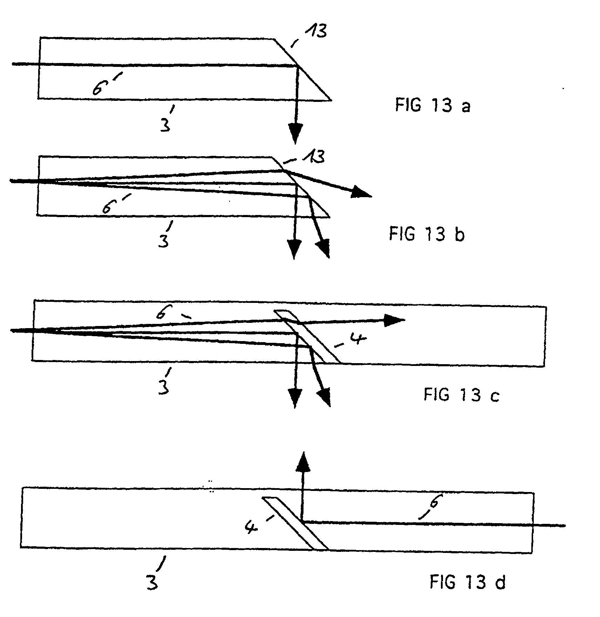

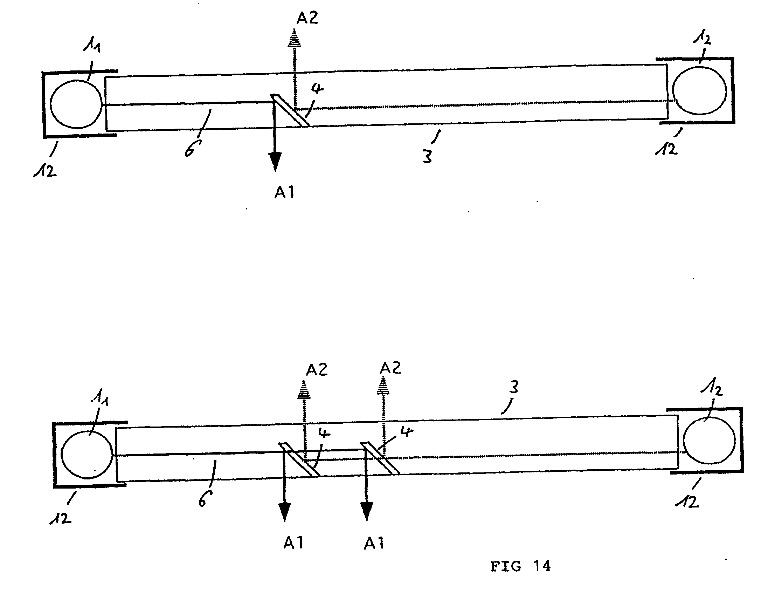

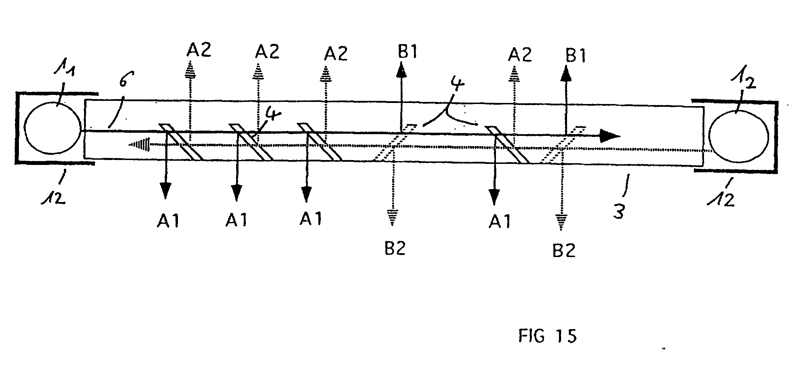

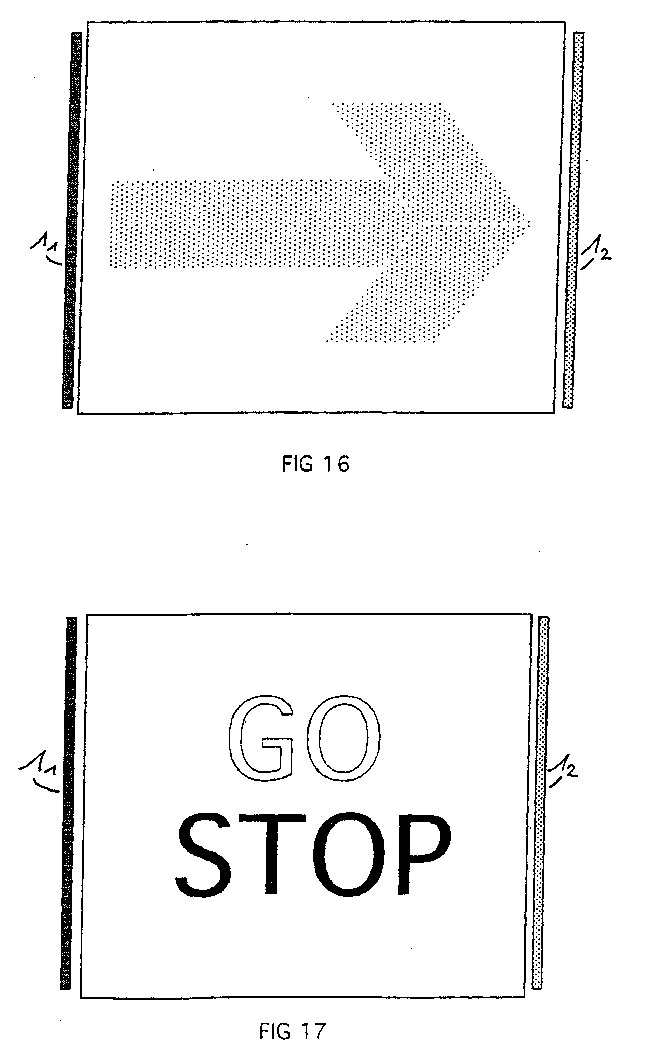

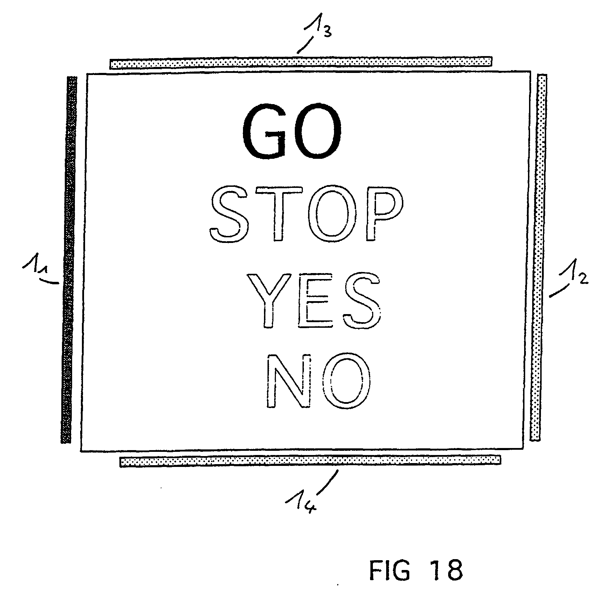

The principle of such a display panel is illustrated in FIG 13. Light 6 which passes into a transparent prism as in FIG 13a may be total internally reflected at a surface 13 at approximately 45° and extracted from the prism of material. If the light entering the prism of material is spread over some angular range then some of the light may be extracted and some of the light may be refracted through the 45° surface 13 as shown in FIG 13b. However, if the reflecting surface is produced internally to the material of the panel by making a parallel sided laser cut 4 into the material at approximately 45° with a laser then some light may be extracted while some light may pass through the laser cut undeviated as shown in FIG 13c. Such light as passes through the laser cut 4 will be retained inside the transparent material by total internal reflection and may subsequently be extracted at other laser cuts 4. If light enters the transparent material from the right hand side as shown in FIG 13d this light will be extracted by total internal reflection into the opposite direction as light entering from the left hand side (FIG 13c). This is illustrated in FIG 14 which shows in cross section how tubular fluorescent light sources 1 and 2 may be coupled to the edges of a solid transparent panel 3. For efficient use of light the sources would require a reflective arrangement 12 around the light source as shown in FIG 14 to couple more of the light from the source into the transparent panel edge. Note that when source $1_1$ is on light is extracted by the laser cut 4 to the front and when source $1_2$ is on light is extracted by the laser cut 4 to the back of the panel. By making a number of laser cuts in specified regions of the panel a pattern may be formed on the surface of the panel which would appear bright from the front when light source $1_1$ is on and would appear bright when viewed from the back when light source $1_2$ is on. A pattern of laser cuts may be made in the panel with the laser cuts sloping upwards to the left (A) and another overlapping pattern of laser cuts sloping upwards to the right (B) as in FIG 15. When light source $1_1$ is on pattern A appears to the front and pattern B appears to the back as illustrated by the full lines in FIG 15. When light source $1_2$ is on the patterns of light displayed to the front and the back are reversed, (broken lines in FIG 15). FIG 16 illustrates how a pattern may be made on the panel by placing a large number of evenly spaced small angled laser cuts in the panel. This pattern becomes luminous when one of the light sources is switched on. When two patterns of small angled laser cuts are made in the panel such that one pattern of laser cuts slopes to the right towards source $1_2$ and the other slopes to the left towards source $1_1$ the patterns can be alternately illuminated by switching between source $1_1$ and $1_2$ as illustrated in FIG 17. If sources are placed at all 4 edges of the panel then four different patterns may be illuminated and alternately displayed by switching alternately between each of the 4 sources as illustrated in FIG 18. Note that the four patterns may be overlapping on the panel. However in FIG 18 the patterns are shown separated for clarity.

It should be noted that where the surface of the panel is perforated by a pattern of angled laser cuts it is possible for moisture and dust to enter the laser cuts and degrade performance. Thus where such panels are used in exposed environments the side of the panel on which the laser cuts are made would be protected by lamination of a thin solid sheet of clear plastic or glass to the panel.

This new type of illuminated display panel would have application in traffic and pedestrian control and also in advertising. It is useful to note that automatic laser cutting machines can be programmed to execute very complex patterns automatically. The mode of production envisaged is that a particular pattern of laser cuts would be programmed and cut in an acrylic panel by a laser cutting beam angled at approximately 45°. The panel would then be rotated through 90° and another pattern (possibly overlapping the first) cut in the panel. The panel is then rotated again through 90° and another pattern cut and so on to produce four patterns. Four light sources fitted to the four edges of the panel could then be switched to alternately make each pattern luminous to a viewer.

While the method of this invention for extracting and distributing light from solid transparent light guides has been described in detail in relation to the production of remote source lighting systems and to the production of luminaire systems and to the production of illuminated displays it is not limited in application to these systems.

### Claims

1. A light distribution system comprising at least one light source (1), at least one solid transparent light guide (3) for receiving light from said light source (1), and means in said light guide (3) for extracting at least a part of the light from said light guide (3),
   wherein the means for extracting the light from said light guide (3) are cuts (4) which extend right through, or partly through, said light guide (3) at a predetermined angle relative to the normal to the surface through which the light has to be extracted,

and wherein the cuts (4) in said light guide (3) are open **characterized in that** the density of the cuts (4) in said light guide (3) increases along the direction in which the light propagates in said light guide (3).

2. The light distribution system according to claim 1, wherein said light source (1) is a fluorescent light tube and wherein said light guide (3) is of rectangular cross section and is coupled at one end to said fluorescent light tube.

3. The light distribution system according to claim 1, wherein said light guide (3) is of disc form and said light source (1) is centered in a central hole in said light guide (3).

4. The light distribution system according to claim 1, wherein said light guide (3) is of disc form and said light source (1) is located on the axis of said light guide (3) and wherein the light of said light source (1) is coupled into said light guide (3) by means of a conical surface (9) in the centre of said light guide (3).

5. The light distribution system according to claim 3 or 4, wherein linear cuts (4) in said light guide (3) are arranged in an essentially circular or polygon like pattern.

6. The light distribution system according to claim 3 or 4, wherein said cuts (4) in said light guide (3) are of essentially circular or circular arc form.

7. The light distribution system according to any one of claims 1 to 6, wherein the planes of the cuts (4) are parallel to each other.

8. The light distribution system according to claim 1, wherein two light sources ($1_1$, $1_2$) are arranged on opposite edges of said light guide (3).

9. The light distribution system according to claim 8, wherein two patterns of cuts are arranged in said light guide (3) and wherein the direction of slope of one of said patterns is rotated 180° relative to the direction of slope of the other pattern.

10. The light distribution system according to claim 1, wherein four light sources ($1_1$-$1_4$) are placed on four edges of said light guide (3) and wherein four patterns of cuts are arranged in said light guide (3) with the direction of the slope of each pattern rotated 90° relative to the other patterns.

11. The light distribution system according to any one of claims 1 to 10, wherein the angle between the cuts (4) and the normal to the surface through which the light has to be extracted is approximately 45°.

12. The light distribution system according to any one of claims 1 to 11, wherein the cuts (4) in said light guide (3) contain two parallel surfaces.

13. The light distribution system according to any one of claims 1 to 12, wherein said light guide (3) is made from acrylic plastic.

14. The light distribution system according to any one of claims 1 to 13, wherein said light distribution system comprises means (12) for injecting the light from said light source (1) into said light guide (3).

15. A light guide (3) for the use in a light distribution system which comprises means for extracting at least a part of the light which has been coupled into the light guide (3), wherein the means for extracting the light are cuts (4) which extend right through, or partly through, the light guide (3) at a predetermined angle relative to the normal to the surface through which the light has to be extracted, and wherein the cuts (4) in said light guide (3) are open **characterized in that** the density of the cuts (4) increases along the direction in which the light propagates in the light guide (3).

16. The light guide according to claim 15, wherein the light guide (3) is of rectangular cross section.

17. The light guide according to claim 15, wherein the light guide (3) is of disc form and wherein said cuts (4) are linear and are arranged in an essentially circular pattern.

18. The light guide according to claim 15, wherein the light guide (3) is of disc form and wherein said cuts (4) are of essentially circular or circular arc form.

19. A method for producing a light guide (3) according to at least one of the claims 15 to 18, wherein the cuts (4) in said light guide (3) are made by laser cutting.

**Patentansprüche**

1. Lichtverteilungssystem, mit wenigstens einer Lichtquelle (1), wenigstens einem festen transparenten Lichtleitelement (3) zum Empfangen von Licht von der Lichtquelle (1), und einer Einrichtung in dem Lichtleitelement (3) zum Auskoppeln wenigstens eines Teils des Lichts aus dem Lichtleitelement (3), wobei die Einrichtung zum Auskoppeln des Lichts aus dem Lichtleitelement (3) Einschnitte (4) sind, die sich ganz durch oder teilweise durch das Lichtleitelement (3) in einem vorgegebenen Winkel zu der Normalen zu der Oberfläche, durch welche das Licht ausgekoppelt werden soll, erstrecken, und wobei die Einschnitte (4) in dem Lichtleitelement (3) offen sind,
   **dadurch gekennzeichnet,**
   **dass** die Dichte der Einschnitte (4) in dem Lichtleitelement (3) entlang der Richtung, in welcher sich das Licht in dem Lichtleitelement (3) ausbreitet, ansteigt.

2. Lichtverteilungssystem nach Anspruch 1, bei welchem die Lichtquelle (1) eine Leuchtstoffröhre ist, und bei welchem das Lichtleitelement (3) einen rechteckigen Querschnitt besitzt und an einem Ende mit der Leuchtstoffröhre gekoppelt ist.

3. Lichtverteilungssystem nach Anspruch 1, bei welchem das Lichtleitelement (3) eine Scheibenform besitzt und die Lichtquelle (1) in einem Mittelloch in dem Lichtleitelement (3) zentriert ist.

4. Lichtverteilungssystem nach Anspruch 1, bei welchem das Lichtleitelement (3) eine Scheibenform besitzt und die Lichtquelle (1) auf der Achse des Lichtleitelements (3) positioniert ist, und bei welchem das Licht der Lichtquelle (1) mittels einer konischen Fläche (9) in der Mitte des Lichtleitelements (3) in das Lichtleitelement (3) eingekoppelt wird.

5. Lichtverteilungssystem nach Anspruch 3 oder 4, bei welchem lineare Einschnitte (4) in dem Lichtleitelement (3) in einem im wesentlichen kreisförmigen oder polygonartigen Muster angeordnet sind.

6. Lichtverteilungssystem nach Anspruch 3 oder 4, bei welchem die Einschnitte (4) in dem Lichtleitelement (3) von im wesentlichen kreisförmiger oder kreisbogenförmiger Form sind.

7. Lichtverteilungssystem nach einem der Ansprüche 1 bis 6, bei welchem die Ebenen der Einschnitte (4) parallel zueinander sind.

8. Lichtverteilungssystem nach Anspruch 1, bei welchem zwei Lichtquellen ($1_1$, $1_2$) an abgewandten Kanten des Lichtleitelements (3) angeordnet sind.

9. Lichtverteilungssystem nach Anspruch 8, bei welchem zwei Muster von Einschnitten in dem Lichtleitelement (3) angeordnet sind, und bei welchem die Neigungsrichtung eines der Muster um 180° relativ zu der Neigungsrichtung des anderen Musters gedreht ist.

10. Lichtverteilungssystem nach Anspruch 1, bei welchem vier Lichtquellen ($1_1$-$1_4$) an vier Kanten des Lichtleitelements (3) platziert sind, und bei welchem vier Muster von Einschnitten in dem Lichtleitelement (3) jeweils mit einer um 90° relativ zu den anderen Mustern gedrehten Neigungsrichtung angeordnet sind.

11. Lichtverteilungssystem nach einem der Ansprüche 1 bis 10, bei welchem der Winkel zwischen den Einschnitten (4) und der Normalen zu der Oberfläche, durch welche das Licht ausgekoppelt werden soll, etwa 45° beträgt.

12. Lichtverteilungssystem nach einem der Ansprüche 1 bis 11, bei welchem die Einschnitte (4) in dem Lichtleitelement (3) zwei parallele Flächen enthalten.

13. Lichtverteilungssystem nach einem der Ansprüche 1 bis 12, bei welchem das Lichtleitelement (3) aus Acrylkunststoff gefertigt ist.

14. Lichtverteilungssystem nach einem der Ansprüche 1 bis 13, bei welchem das Lichtverteilungssystem eine Einrichtung (12) zum Einleiten des Lichts von der Lichtquelle (1) in das Lichtleitelement (3) aufweist.

15. Lichtleitelement (3) zur Verwendung in einem Lichtverteilungssystem, das eine Einrichtung zum Auskoppeln wenigstens eines Teils des Lichts, das in das Lichtleitelement (3) eingekoppelt worden ist, aufweist, wobei die Einrichtung zum Auskoppeln des Lichts Einschnitte (4) sind, die sich ganz durch oder teilweise durch das Lichtleitelement (3) in einem vorgegebenen Winkel zu der Normalen zu der Oberfläche, durch welche das Licht ausgekoppelt werden soll, erstrecken, und wobei die Einschnitte (4) in dem Lichtleitelement (3) offen sind,

**dadurch gekennzeichnet,**
**dass** die Dichte der Einschnitte (4) entlang der Richtung, in welcher sich das Licht in dem Lichtleitelement (3) ausbreitet, ansteigt.

16. Lichtleitelement nach Anspruch 15, bei welchem das Lichtleitelement (3) einen rechteckigen Querschnitt besitzt.

17. Lichtleitelement nach Anspruch 15, bei welchem das Lichtleitelement (3) eine Scheibenform besitzt, und bei welchem die Einschnitte (4) linear sind und in einem im wesentlichen kreisförmigen Muster angeordnet sind.

18. Lichtleitelement nach Anspruch 15, bei welchem das Lichtleitelement (3) eine Scheibenform besitzt, und bei welchem die Einschnitte (4) von im wesentlichen kreisförmiger oder kreisbogenförmiger Form sind.

19. Verfahren zur Herstellung eines Lichtleitelements (3) nach einem der Ansprüche 15 bis 18, bei welchem die Einschnitte (4) in dem Lichtleitelement (3) durch Laserschneiden gemacht werden.

**Revendications**

1. Système de distribution de lumière comprenant au moins une source de lumière (1), au moins un guide de lumière transparent solide (3) pour recevoir la lumière de ladite source de lumière (1), et des moyens dans ledit guide de lumière pour extraire au moins une partie de la lumière provenant dudit guide de lumière (3),
dans lequel les moyens pour extraire la lumière provenant dudit guide de lumière (3) sont des découpes (4) qui s'étendent à travers ou partiellement à travers ledit guide de lumière (3) selon un angle prédéterminé par rapport à la normale à la surface à travers laquelle la lumière doit être extraite,
et dans lequel les découpes (4) dans ledit guide de lumière (3) sont ouvertes,
**caractérisé en ce que**
la densité des découpes (4) dans ledit guide de lumière (3) augmente le long de la direction dans laquelle se propage la lumière dans ledit guide de lumière (3).

2. Système de distribution de lumière selon la revendication 1,
dans lequel ladite source de lumière (1) est un tube de lumière fluorescente et dans lequel ledit guide de lumière (3) est de section transversale rectangulaire et est accouplé sur une extrémité audit tube de lumière fluorescente.

3. Système de distribution de lumière selon la revendication 1,
dans lequel ledit guide de lumière (3) a la forme d'un disque et ladite source de lumière (1) est centrée dans un trou central dans ledit guide de lumière (3).

4. Système de distribution de lumière selon la revendication 1,
dans lequel ledit guide de lumière (3) a la forme d'un disque et ladite source de lumière (1) est située sur l'axe dudit guide de lumière (3) et dans lequel la lumière de ladite source de lumière (1) est accouplée dans ledit guide de lumière (3) au moyen d'une surface conique (9) au centre dudit guide de lumière (3).

5. Système de distribution de lumière selon la revendication 3 ou 4,
dans lequel les découpes linéaires (4) dans ledit guide de lumière (3) sont disposées dans une configuration sensiblement circulaire ou polygonale.

6. Système de distribution de lumière selon la revendication 3 ou 4,
dans lequel lesdites découpes (4) dans ledit guide de lumière (3) sont de forme essentiellement circulaire ou en arc de cercle.

7. Système de distribution de lumière selon l'une quelconque des revendications 1 à 6,
dans lequel les plans des découpes (4) sont parallèles entre eux.

8. Système de distribution de lumière selon la revendication 1, dans lequel deux sources de lumière ($1_1$, $1_2$) sont disposées sur des bords opposés dudit guide de lumière (3).

9. Système de distribution de lumière selon la revendication 8,
dans lequel deux configurations de découpes sont agencées dans ledit guide de lumière (3) et dans lequel la direction de pente de l'une desdites configurations est en rotation de 180° par rapport à la direction de pente de l'autre configuration.

10. Système de distribution de lumière selon la revendication 1,
dans lequel quatre source de lumière ($1_1$-$1_4$) sont placées sur quatre borde dudit guide de lumière (3) et dans lequel quatre configurations de découpes sont agencées dans ledit guide de lumière (3) avec la direction de la pente de chaque configuration en rotation de 90° par rapport aux autres configurations.

11. Système de distribution de lumière selon l'une quelconque des revendications 1 à 10,

dans lequel les angles entre les découpes (4) et la normale à la surface à travers laquelle la lumière doit être extraite est d'environ 45°.

**12.** Système de distribution de lumière selon l'une quelconque des revendications 1 à 11,
dans lequel les découpes (4) dans ledit guide de lumière (3) contiennent deux surfaces parallèles.

**13.** Système de distribution de lumière selon l'une quelconque des revendications 1 à 12,
dans lequel ledit guide de lumière (3) est réalisé à partir de plastique acrylique.

**14.** Système de distribution de lumière selon l'une quelconque des revendications 1 à 13,
dans lequel ledit système de distribution de lumière comprend des moyens (12) pour injecter la lumière à partir de ladite source de lumière (1) dans ledit guide de lumière (3).

**15.** Guide de lumière (3) pour l'utilisation dans un système de distribution de lumière qui comprend des moyens pour extraire au moins une partie de le lumière qui a été couplée dans ledit guide de lumière (3),
dans lequel les moyens pour extraire la lumière sont des découpes (4) qui s'étendent à travers, ou partiellement à travers le guide de lumière (3) selon un angle prédéterminé par rapport à la normale à la surface à travers laquelle la lumière doit être extraite,
et dans lequel les découpes (4) dans ledit guidé de lumière (3) sont ouvertes
**caractérisé en ce que**
la densité des découpes (4) augmente le long de la direction dans laquelle se propage la lumière dans le guide de lumière (3).

**16.** Guide lumière (3) selon la revendication 15,
dans lequel le guide de lumière (3) est de section transversale rectangulaire.

**17.** Guide de lumière selon la revendication 15,
dans lequel le guide de lumière (3) a la forme d'un disque et dans lequel lesdites découpes (4) sont linéaires et sont disposées dans une configuration essentiellement circulaire.

**18.** Guide de lumière selon la revendication 15,
dans lequel le guide de lumière (3) a la forme d'un disque et dans lequel lesdites découpes (4) sont de forme circulaire ou en arc de cercle.

**19.** Procédé pour produire un guide de lumière (3) selon au moins l'une des revendications 15 à 18,
dans lequel les découpes (4) dans ledit guide de lumière (3) sont réalisées par découpage au la-

ser.

FIG 1

$$1 - f1$$

$$f1 \qquad (1 - f1)\ f2$$

FIG 2

1/5          1/4          1/3          1/2          1

FIG 3

FIG 4

FIG 5

FIG 6

FIG 7

FIG 8

FIG 9

EP 1 084 366 B1

FIG 10

FIG 11

FIG 12a

FIG 12b

FIG 13 a

FIG 13 b

FIG 13 c

FIG 13 d

22

FIG 14

FIG 15

FIG 16

FIG 17

FIG 18